# EUROPÄISCHE PATENTSCHRIFT

(11) **EP 0 568 572 B1**
(45) Veröffentlichungstag und Bekanntmachung des Hinweises auf die Patenterteilung: **16.08.1995**
(21) Anmeldenummer: 92903236.5
(22) Anmeldetag: 21.01.1992
(51) Int. Cl.: G06K 19/077

(54) **TRÄGERELEMENT FÜR INTEGRIERTE HALBLEITER-SCHALTKREISE, INSBESONDERE ZUM EINBAU IN CHIP-KARTEN**
SUPPORT FOR INTEGRATED SEMICONDUCTOR CIRCUITS, ESPECIALLY FOR INSTALLATION IN CHIP BOARDS
SUPPORT POUR CIRCUITS INTEGRES A SEMI-CONDUCTEURS, NOTAMMENT POUR MONTAGE DANS DES CARTES A PUCE

(30) Priorität: 21.01.1991 DE 9100665 U
(43) Veröffentlichungstag der Anmeldung: 10.11.1993
(73) Patentinhaber: TELBUS GESELLSCHAFT FUR ELEKTRONISCHE KOMMUNIKATIONS-SYSTEME MBH, D-85386 Eching (DE)
(72) Erfinder: SCHNEIDER, Edgar, D-8057 Günzenhausen (DE)
(74) Vertreter: KUHNEN, WACKER & PARTNER
(86) Internationale Anmeldenummer: DE9200034
(87) Internationale Veröffentlichungsnummer: WO9213318

(56) Entgegenhaltungen:
- EP-A- 0 068 539
- EP-A- 0 107 061
- EP-A- 0 231 937
- EP-A- 0 299 530
- EP-A- 0 383 435
- WO-A-91/01533
- Patent abstracts of Japan, Band 10, Nr. 344, P518, Zusammenfassung von JP 61-145696, publ 1986-07-03 MATSUSHITA ELECTRIC

## Beschreibung

Die vorliegende Erfindung betrifft ein Trägerelement für integrierte Halbleiter-Schaltkreise bzw. Halbleiter-Chips, insbesondere zum Einbau in sogenannte Chip-Karten.

Chip-Karten finden immer breitere Verwendung als Identifikations-, Kredit- oder Buchungskarten und dergleichen. Um die Herstellung dieser Karten rationell und kostengünstig zu gestalten, wird als Trägerelement vorzugsweise ein Halbfabrikat verwendet, bei dem auf einer mit Leiterbahnen versehenen flexiblen Trägerfolie ein oder mehrere integrierte Schaltkreise in Form von Halbleiter-Kristallen montiert sind. Die Kontaktierung der integrierten Schaltkreise bzw. Halbleiter-Chips mit entsprechenden Anschlußpunkten auf der flexiblen Trägerfolie geschieht üblicherweise entweder mittels Bond-Verfahren (z.B. DE-OS 32 35 650) oder mittels Direktkontaktierungs-Verfahren (z.B. DE-AS 29 20 012). Bei der Kartenherstellung werden diese Trägerelemente in passend geformte Ausparungen des Kartenmaterials eingesetzt. Beim Verpressen von Chipkartenlaminaten und Trägerelementen treten je nach verwendetem Verfahren Drücke bis zu 160 bar auf. Dabei werden die empfindlichen integrierten Schaltkreise bzw. Halbleiter-Chips häufig beschädigt. Auch die beim Gebrauch von Chip-Karten auftretenden Verbiegungen und daraus resultierende Biegekräfte können zu einer Beschädigung der Halbleiter-Chips führen. Um derartige Beschädigungen zu vermeiden bzw. zu reduzieren, ist es beispielsweise aus der DEOS 36 39 630 bekannt, den bereits mit dem Trägerelement verbundenen Halbleiter-Chip durch eine Schutzfolie aus einem Material mit hohem elastischen Deformierungsvermögen abzudecken.

Durch die Verbiegungen beim Kartengebrauch kommt es auch immer wieder vor, daß an der Nahtstelle zwischen Halbleiter-Chip und Kartenmaterial Risse auftreten und unter extremen Bedingungen der gesamte Halbleiter-Kristall aus der Karte herausbricht. Um dies zu vermeiden ist es beispielsweise aus der EP-A 0 211 360 bekannt zwischen Halbleiter-Chip und Kartenmaterial eine dünne verstärkende Schicht, beispielsweise aus einem dünnen Netzgeflecht, vorzusehen.

Wenn die Halbleiter-Kristalle bzw. Halbleiter-Chips durch Bonden mit den entsprechenden Anschlußpunkten auf der flexiblen Trägerfolie verbunden werden, werden die Bond-Drähte und der Halbleiter-Chip üblicherweise mit einer Guß- bzw. Abdeckmasse versehen. Diese Guß- oder Abdeckmasse schützt natürlich nicht nur die Bond-Drähte sondern auch den Halbleiter-Chip. Um diese Gußmasse im flüssigen bzw. halbflüssigen Zustand gezielt aufbringen zu können, ist es beispielsweise aus der DE-OS 32 35 650 bekannt, das Trägerelement mit einem dem Halbleiter-Chip samt Bond-Drähten umgebenden ringförmigen Begrenzungsrahmen zu versehen. Dieser Begrenzungsring für die Abdeckmasse besteht üblicherweise aus Glasepoxy oder PVC. Außer dem Ausgießen des Bereichs innerhalb des ringförmigen Begrenzungsrahmens mit Epoxydharz oder Silikonkautschuk weist die aus der DE-OS 32 35 650 bekannte Chip-Karte bzw. Trägeelement keinerlei weitere Vorkehrungen zum Schutz des Halbleiter-Kristalls auf. Es besteht daher die Gefahr, daß beim Verpressen der Trägerelemente mit den Chipkartenlaminat bzw. beim Gebrauch der fertigen Chip-Karte Beschädigungen des Halbleiter-Kristalls auftreten.

Aus der DE-OS 29 42 422, von der der Anspruch 1 im Oberbegriff ausgeht, ist es bekannt, den Begrenzungsrahmen für die Verguß- bzw. Abdeckmasse gleichzeitig aus Verstärkungsrahmen für das Trägerelement auszubilden. Dieser Verstärkungsrahmen ist am Rande der Trägerplatte bzw. des Trägerelements angeordnet und dient dazu, die Trägerplatte als Ganzes genügend zu versteifen. D. h. die Trägerplatte wird durch den Versteifungsring nur soweit versteift, daß sie dennoch die "erforderliche Biegsamkeit" aufweist. Erforderliche Biegsamkeit heißt in diesem Zusammenhang, daß die durch die ISO/DIN-Norm für die Chip-Karten geforderten Belastungen, insbesondere Biegebelastungen, nicht zu einer Zerstörung oder Funktionsbeeinträchtigung der Chip-Karte führen. Da die aus diesem Stand der Technik bekannten Versteifungsrahmen am Rande des Trägerelements bzw. der Trägerplatte angeordnet sind, ist es unvermeidlich, daß bei derartigen Biegungen die empfindlichen Halbleiterkristalle mechanisch beansprucht werden.

Aus der EP-A-0 231 937 ist es bekannt den aus der DE-OS 29 42 422 bekannten Verstärkungsrahmen so auszubilden, daß er den Chip bzw. den Halbleiterkristall möglichst eng umschließt. Der Verstärkungsrahmen besteht dabei aus Stahl, so daß der Verstärkungsrahmen eine wesentlich höhere Biegesteifigkeit als ein flexibles Trägersubstrat und auch als der Kartenkörper aufweist. Da der Versteifungsring bzw. Versteifungsrahmen eine höhere Biegesteifigkeit aufweist als das flexible Trägersubstrat und der Kartenkörper, können Biege- und Torsionsbeanspruchungen des Trägersubstrats bzw. des Kartenkörpers nicht zur Beschädigung des von dem Versteifungsring umschlossenen Halbleiterkristalls führen. Wenn das Trägerelement in den Kartenkörper integriert wird, wird das Innere des Verstärkungsrahmens mit dem Halbleiterkristall mit einer Abdeckmasse ausgegossen, die den Halbleiterkristall und eventuell vorhandene Bonddrähte umschließt und damit schützt. Beim Gebrauch derartig aufgebauter Chip-Karten hat sich jedoch herausgestellt, daß die üblicherweise verwendeten Abdeckmassen bei Biege- und Torsionsbeanspruchungen von dem Versteifungsring abscheren und es zur Funktionsbeeinträchtigung des Halbleiter-Chips kommt.

Es ist daher Aufgabe der vorliegenden Erfindung ein Trägerelement für integrierte Halbleiter-Schaltkreise sowie eine damit ausgerüstete Chip-Karte zu schaffen, durch das bzw. bei der dieses Abscheren verhindert wird.

Die Lösung dieser Aufgabe erfolgt durch die Merkmale des Anspruchs 1 bzw. 8.

Durch die Vielzahl von in den Ringinnenraum weisenden Verankerungsvorsprünge wird ein besserer und dauerhafterer Verbund zwischen der Abdeckmasse und dem Versteifungsring gewährleistet, so daß es bei üblichem Gebrauch nicht mehr zu Abscherungen kommt. Die Vielzahl der Verankerungsvorsprünge ist im wesentlichen gleichmäßig über den Innenumfang des Versteifungsringes verteilt, so daß die Vergußmasse nicht an einer glatten Innenkante, sondern an einer gezakten oder welligen Innenkante des Versteifungsringes angreift, wodurch sich ein verbesserter Verbund zwischen Vergußmasse und Versteifungsring ergibt.

Durch die vorteilhafte Ausgestaltung der Erfindung nach Anspruch 2 wird verhindert, daß die Stabilität bzw. die Biegesteifigkeit des Versteifungsringes durch Kerbwirkung zu stark beeinträchtigt wird.

Durch die vorteilhafte Ausgestaltung der Erfindung nach Anspruch 3 kann der Ring nach wie vor durch Ausstanzen aus einer Metallplatte bzw. aus einem Blech kostengünstig hergestellt werden. Damit wird die Herstellung des erfindungsgemäßen Versteifungsringes und damit des erfindungsgemäßen Trägerelements bzw. der erfindungsgemäßen Chip-Karte nicht verteuert.

Die besonders Ausgestaltung der Trägerelement gemäß Anspruch 4 ist besonders für Chip-Karten geeignet, die hohen Biegeund Torsionsbeanspruchungen ausgesetzt sind. Durch zusätzlich nach außen weisende Verankerungsvorsprünge wird der Zusammenhalt des Versteifungsringes nicht mehr mit der Vergußmasse sondern mit dem Kartenkörper als Ganzes verbessert.

Der Verbund des Versteifungsringes mit dem Kartenkörper wird auch durch die aufgerauhte Oberfläche gemäß Anspruch 5 verbessert.

Gemäß einer bevorzugten Ausführungsform nach Anspruch 6 ist ein Teil - ein oder zwei - der nach innen weisenden Verankerungsvorsprünge als Marken für ein optisches Erkennungssystem ausgebildet. Auf diese Weise wird einerseits gewährleistet, daß ein enger Verbund zwischen Vergußmasse und Versteifungsring gewährleistet ist und darüberhinaus ist gewährleistet, daß sich das erfindungsgemäße Trägerelement durch automatische Produktionsverfahren herstellen läßt.

Eine mit einem erfindungsgemäßen Trägerelement ausgerüstete Chip-Karte gemäß Anspruch 7 ist gegenüber mechanischen Belastungen unempfindlicher, da insbesondere die Abdeckmasse im Inneren des Versteifungsringes nicht mehr von dem Versteifungsring abscheren kann. Das Ausgießen des Ringinnenraumes mit der Abdeckmasse kann sowohl vor Einbau des Trägerelements in den Kartenkörper oder bei Einbau des Trägerelements in den Kartenkörper geschehen.

Hinsichtlich der für den Versteifungsring geeigneten Materialien, der Herstellungsverfahren für das Trägerelement und/oder die damit ausgerüstete Chip-Karte wird vollinhaltlich auf die DE-OS 39 24 439 bzw. die PCT/DE90/00559, die eine Anmeldungen des vorliegenden Anmelders sind, Bezug genommen.

Weitere Einzelheiten, Aspekte und Vorteile der vorliegenden Erfindung ergeben sich aus der nachfolgenden Beschreibung unter Bezugnahme auf die Zeichnung.

Es zeigt:
- Fig. 1: eine Draufsicht auf eine bevorzugte Ausführungsform des erfindungsgemäßen Trägerelements von der Seite auf der der Versteifungsring angeordnet ist, und
- Fig. 2: eine Schnittansicht durch eine Chip-Karte mit einem Trägerelement gemäß Fig.1.

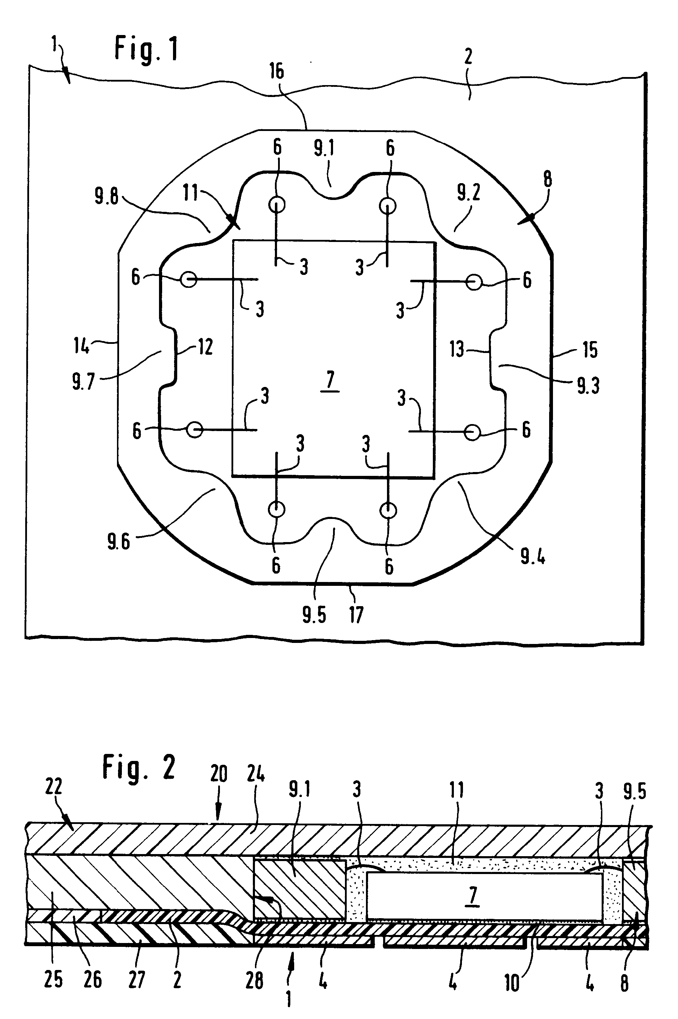

Das erfindungsgemäße Trägerelement 1 weist ein flexibles Trägersubstrat in Form einer flexiblen Trägerfolie 2 auf, auf der ein- oder beidseitig nicht dargestellte Leiterbahnen vorgesehen sind. Das Trägersubstrat 2 besteht wegen seiner elastischen Eigenschaften vorzugsweise aus Polyimid. Es eignen sich aber auch faserverstärktem Epoxy (EPG) oder Polyester. Die Leiterbahnen stellen elektrische Verbindungen zwischen Anschlußpunkten 6 und Kontaktflächen 4 (siehe Fig. 2) her, die auf der in Fig.1 nicht zu sehenden Seite des Trägersubstrats 2 angeordnet sind. Über die Anschlußpunkte 6 wird mittels aufgebondeten Anschlußdrähten 3 der elektrische Kontakt zu einem integrierten Schaltkreis bzw. Halbleiter-Chip 7 hergestellt. Über die Kontaktflächen 4 wird später beim Gebrauch der fertiggestellten Chip-Karte der Kontakt zu dem Halbleiter-Chip 7 hergestellt. In dem Trägerelement 1 nach Fig. 1 liegen die Kontaktflächen 4 auf der einen Seite der flexiblen Trägerfolie 2 und die Anschlußpunkte 6 auf der anderen Seite der flexiblen Trägerfolie. Auf der Seite mit den Anschlußpunkten 6 ist auch der Halbleiter-Chip bzw. - Kristall 7 auf der Trägerfolie 2 angeordnet. Auf dieser Seite der flexiblen Trägerfolie ist auch ein den Halbleiter-Chip bzw. Halbleiterkristall 7 eng umschließender Versteifungsring 8 befestigt, der radial in das Ringinnere weisende Verankerungsvorsprünge 9 aufweist. Der Versteifungsring 8 überdeckt lediglich einen Teil der Fläche des Trägersubstrats 2. Der Versteifungsring 8 besteht aus der Metall-Legierung CuSn6 mit einer Härte von 195 HV. Der Versteifungsring 8 und der Halbleiterkristall 7 sind mittels einer Klebeschicht 10 auf der flexiblen Trägerfolie 2 befestigt. Das Innere des Versteifungsringes 8 ist mit einer Abdeckmasse 11 ausgefüllt, so daß die Halbleiterkristalle 7 samt Bonddrähten 3 von der Abdeckmasse 11 schützend umgeben ist.

Die in Fig. 1 dargestellte Ausführungsform weist acht Verankerungsvorsprünge 9.1 bis 9.8 auf, die im wesentlichen gleichmäßig über den Innenumfang des Versteifungsringes 8 verteilt sind. Die Verankerungsvorsprümge 9 sind abgerundet, so daß die Biegesteifigkeit im Vergleich zu einem ideal kreisringförmigen Versteifungsring nur unwesentlich kleiner ist. Die Verankerungsvorsprünge sind so angeordnet, daß sie in den Raum zwischen den einzelnen Bonddrähten 3 bzw. Anschlußpunkten 6 hineinragen. Auf diese Weise ist es möglich, daß der einzelne Halbleiter-Chip 7 noch enger umschlossen wird bzw. Versteifungsringe 8 mit kleinerem Außendurchmesser verwendet werden können.

Die Verankerungsvorsprünge 9.7 und 9.3 besitzen nach innen weisende gerade Bereiche 12 bzw. 13 und sind somit zusätzlich als Marken für optische Erkennungssysteme von Fertigungsautomaten, insbesondere für die Orientierung vollautomatisch arbeitender Bondmaschinen, ausgebildet. Zu diesem Zweck dienen auch gerade Bereiche 14, 15, 16 und 17 am Außenumfang des Versteifungsringes 8.

Das vorstehend beschriebene Trägerelement nach Fig. 1 ist insbesondere für den Einbau in Chip-Karten nach der derzeit geltenden ISO-Norm Nr. 7816 geeignet und ausgelegt. Die erfindungsgemäßen Trägerelemente lassen sich natürlich auch in andere Schaltungen und Vorrichtung einbauen, die mechanischen Beanspruchungen ausgesetzt sind.

Fig. 2 zeigt schematisch eine bevorzugte Ausführungsform einer Chip-Karte 20. Auch die Chip-Karte 20 weist einen Kartenkörper 22 auf, in den das erfindungsgemäße Trägerelement 1 mit integriertem Halbleiterschaltkreis 7 eingebaut ist. Die Schnittdarstellung von Fig.2 ist so gewählt, daß die Verankerungsvorsprünge 9.1 und 9.5 aus Fig. 1 zu sehen bzw. angeschnitten dargestellt sind. Der Kartenkörper 22 besteht aus vier Laminatschichten, einer oberen Deckschicht 24, einer Mittelschicht 25, einer Ausgleichsschicht 26 und einer unteren Deckschicht 27, die bei der Herstellung der Chip-Karte 20 unter Heißdruck zum Kartenkörper 22 verpreßt werden. Die Mittelschicht 22. die Ausgleichsschicht 26 und die untere Deckschicht 27 weisen Ausnehmungen auf, die zusammen eine Aussparung 28 bilden, den das Trägerelement 1 ausfüllt. Die obere Deckschicht 24 überdeckt den Versteifungsring 8. Dann folgt als nächste Laminatschicht die Mittelschicht 22, deren Dicke kleiner als die Höhe des Versteifungsringes 8 ist und eine Ausnehmnung aufweist, die dem Querschnitt des Versteifungsringes 8 entspricht. Dann folgt die Ausgleichsschicht 26, deren Dicke gleich der Dicke des Trägersubstrats 2 ist. Die Ausgleichsschicht 26 weist eine Ausnehmung auf, die der Fläche des Trägerelemnts 1 entspricht und die somit größer ist als die Ausnehmung in der Mittelschicht 25. Schließlich folgt noch die untere Deckschicht 27, die die andere Seite des Trägerelements 1 und damit das Trägersubstrat 2 abdeckt und nur die Kontaktflächen 4 frei zugänglich läßt. Damit wird nicht nur das ganze Trägerelement 1 sandwichartig durch Laminatschichten eingeschlossen, sondern ebenso der nicht von dem Versteifungsring 8 überdeckte Teil des flexiblen Trägersubstrats 2. Das Innere des Versteifungsringes 8 ist mit der Abdeckmasse 11 ausgegossen.

Der Halt des Trägerelements 1 in dem Kartenkörper 22 wird zusätzlich noch dadurch verbessert, daß der nicht von dem Versteifungsring 8 überdeckte Teil des Trägersubstrats 2 tiefer in dem fertigen Kartenkörper 22 angeordnet ist, als der von dem Versteifungsring 8 überdeckte Teil des Trägersubstrats 2. Damit bildet der von dem Versteifungsring 8 überdeckte Teil des Trägersubstrat 2 eine flache Mulde im nicht von dem Versteifungsring 8 überdeckten Teil des Trägersubstrats 2. Um die Anordnung nach Fig. 2 zu ermöglichen, muß eine besonders flexibles Trägersubstrat 2 verwendet werden. Besonders geeignet ist hierfür eine Folie aus Polyimid wegen ihrer Temperaturstabilität bis 250°C und ihrer hohen Flexibilität. Die Dicke der verwendeten Folien liegt bei ca. 100 um.

Zum Zugriff auf den in der Chip-karte eingebetteten Halbleiterkristall kann anstelle des Zugriff über Kontaktflächen auch über Induktionsschleifen zugegriffen werden. Dies hat den Vorteil, daß obere und untere Deckschichten keinerlei Ausnehmungen aufweisen müssen, d. h. das Trägerelement ist vollständig in den Kartenkörper eingebettet.

Es lassen sich auch mehrere Trägerelemente oder ein einzelnes Trägerelement mit mehreren nebeneinander angeordneten Versteifungsringen in eine Chip-Karte einbauen.

## Patentansprüche

1. Trägerelement für Halbleiter-Chips mit wenigstens einem integrierten Schaltkreis in Form eines Halbleiterkristalls (7), insbesondere für den Einbau in Chip-Karten (2), mit
einem flexiblen Trägersubstrat (2) auf dessen Oberflächen mehrere Kontaktflächen (4) vorgesehen sind, die über Leiterbahnen mit Anschlußpunkten (6) für den integrierten Schaltkreis (7) verbunden sind, und
einem auf dem flexiblen Trägersubstrat (2) befestigten Versteifungsring (8), der nur einen Teil der Fläche des flexiblen Trägersubstrats (2) umschließt, der eine wesentlich höhere Biegesteifigkeit aufweist als das flexible Trägersubstrat (2), und in dessen Innerem der bzw. die integrierten Schaltkreise angeordnet sind, **dadurch gekennzeichnet**,
daß der Versteifungsring (8) radial nach innen weisende Verankerungsvorsprünge (9) aufweist, die im wesentlichen gleichmäßig über den Innenumfang des Versteifungsringes (8) verteilt sind.

2. Trägerelement nach Anspruch 1, dadurch gekennzeichnet, daß die Verankerungsvorsprünge (9) abgerundet sind.

3. Trägerelement nach wenigstens einem der vorhergehenden Ansprüche, dadurch gekennzeichnet, daß der Versteifungsring (8) in Richtung senkrecht zum Trägersubstrat (2) einen konstanten Querschnitt aufweist.

4. Trägerelement nach wenigstens einem der vorhergehenden Ansprüche, dadurch gekennzeichnet, daß der Versteifungsring (8) radial nach außen weisende Verankerungsvorsprünge aufweist.

5. Trägerelement nach wenigstens einem der vorhergehenden Ansprüche , dadurch gekennzeichnet, daß der Versteifungsring (8) eine aufgerauhte oberfläche aufweist.

6. Trägerelement nach wenigstens einem der vorhergehenden Ansprüche, dadurch gekennzeichnet, daß wenigstens einer der radial nach innen weisenden Verankerungsvorsprünge (9.3, 9.7) als Marken für ein optisches Erkennungssystem ausgebildet ist.

7. Trägerelement nach wenigstens einem der vorhergenannten Ansprüche, dadurch gekennzeichnet, daß der Halbleiter- Chip (7) mittels Bonddrähten (3) mit Anschlußpunkten (6) elektrisch verbunden ist, und daß die Verankerungsvorsprünge (9) in den Raum zwischen den einzelnen Bonddrähten 3 bzw. Anschlußpunkten 6 hineinragen.

8. Chip-Karte in ISO-Norm mit wenigstens einem integrierten Schaltkreis, der auf einem Trägerelement angeordnet ist, gekennzeichnet durch ein Trägerelement nach einem der Ansprüche 1 bis 7, wobei das Innere des Versteifungsringes (8) mit Abdeckmasse (11) ausgegossen ist.

## Claims

1. A support element for semiconductor chips having at least one integrated circuit in the form of a semiconductor crystal (7), more particularly for use in smart cards (2), having:
a flexible support substrate (2) having on its surfaces a number of contact surfaces (4) connected by conductor paths to connection points (6) for the integrated circuit (7), and
a strengthening ring (8) which is secured to the flexible support substrate (2) and extends around only some of the surface thereof, has much greater flexural strength than the flexible support substrate (2) and has the or each integrated circuit disposed in its interior, characterised in that
the strengthening ring (8) has fixing projections (9) which extend radially inwards and which are distributed substantially uniformly over the inner periphery of such ring (8).

2. A support element according to claim 1, characterised in that the fixing projections (9) are rounded.

3. A support element according to at least one of the previous claims, characterised in that the strengthening ring (8) has a constant cross-section in a direction perpendicular to the support substrate (2).

4. A support element according to at least one of the previous claims, characterised in that the strengthening ring (8) has radially outwardly extending fixing projections.

5. A support element according to at least one of the previous claims, characterised in that the strengthening ring (8) has a roughened surface.

6. A support element according to at least one of the previous claims, characterised in that at least one of the radially inwardly extending fixing projections (9.3, 9.7) is devised as marking for an optical recognition system.

7. A support element according to at least one of the previous claims, characterised in that the semiconductor chip (7) is electrically connected to connection points (6) by way of bond wires (3) and the fixing projections (9) extend into the gap between the discrete bond wires (3) or connection points (6).

8. A smart card to the ISO Standard having at least one integrated circuit disposed on a support element, characterised by a support element according to any of claims 1 to 7, the interior of the strengthening ring (8) being filled with a filling compound (11).

## Revendications

1. Elément de support pour puces à semi-conducteurs ayant au moins un circuit intégré sous forme de cristal semi-conducteur (7), en particulier pour le montage dans des cartes à puce (2), comportant
un substrat de support flexible (2), sur la surface duquel sont prévues plusieurs surfaces de contact (4) qui sont reliées, par l'intermédiaire de pistes conductrices, à des points de raccordement (6) pour le circuit intégré (7), et
une frette (8) fixée sur le substrat de support flexible (2), qui entoure seulement une partie de la surface du substrat de support flexible (2), qui présente une rigidité à la flexion sensiblement plus élevée que le substrat de support flexible (2), et à l'intérieur de laquelle le ou les circuits intégrés sont placés,
caractérisé en ce que
la frette (8) présente des saillies d'ancrage (9) orientées radialement vers l'intérieur, qui sont réparties sensiblement régulièrement sur le pourtour intérieur de la frette (8).

2. Elément de support selon la revendication 1, caractérisé en ce que les saillies d'ancrage (9) sont arrondies.

3. Elément de support selon au moins une des revendications précédentes, caractérisé en ce que la frette (8) présente une section constante dans la direction perpendiculaire au substrat de support (2).

4. Elément de support selon au moins une des revendications précédentes, caractérisé en ce que la frette (8) présente des saillies d'ancrage indiquant radialement l'extérieur.

5. Elément de support selon au moins une des revendications précédentes, caractérisé en ce que la frette (8) présente une surface rugueuse.

6. Elément de support selon au moins une des revendications précédentes, caractérisé en ce qu'au moins une des saillies d'ancrage (9.3, 9.7) orientée radialement vers l'intérieur est formée comme des repères pour un système de reconnaissance optique.

7. Elément de support selon au moins une des revendications précédentes, caractérisé en ce que la puce à semi-conducteurs (7) est reliée électriquement aux points de raccordement (6), au moyen de fils de liaison (3), et en ce que les saillies d'ancrage (9) avancent dans l'espace entre les fils de liaison (3), respectivement les points de raccordement (6), particuliers.

8. Carte à puce selon la norme ISO ayant au moins un circuit intégré qui est placé sur un élément de support, caractérisée par un élément de support selon l'une des revendications 1 à 7, l'espace intérieur de la frette (8) étant rempli d'une masse de recouvrement (11).
